# EUROPÄISCHE PATENTSCHRIFT

(11) **EP 1 482 267 B1**
(45) Veröffentlichungstag und Bekanntmachung des Hinweises auf die Patenterteilung: **03.02.2010**
(21) Anmeldenummer: 04450087.4
(22) Anmeldetag: 09.04.2004
(51) Int. Cl.: F27B 9/20

(54) **Verfahren zum Brennen von keramischem Stückgut in einen Brennkanal mit einer quergeströmten Umwälzung der Heissgasen**
Process for burning ceramic articles in a firing tunnel with a cross recirculation of the gases
Procédé de cuisson de pièces céramiques dans un canal de cuisson avec recirculation transversale des gaz

(30) Priorität: 26.05.2003 AT 8072003
(43) Veröffentlichungstag der Anmeldung: 01.12.2004
(73) Patentinhaber: Wienerberger AG, 1100 Wien (AT)
(72) Erfinder: Linke, Walter, 3400 Mauerbach (AT)
(74) Vertreter: Gibler, Ferdinand

(56) Entgegenhaltungen:
- EP-A- 1 050 731
- DE-A- 2 110 603
- DE-B- 1 251 470
- GB-A- 855 322
- US-A- 2 975 499
- US-A- 4 752 268

## Beschreibung

Die Erfindung betrifft einen Brennofen mit einem Brennkanals, wobei zumindest ein Stapel mit keramischem Stückgut, insbesondere Ziegel od. dgl., in dem Brennkanal anordenbar ist und der Brennkanal sowie der zumindest eine Stapel mit keramischem Stückgut in einer Hauptströmungsrichtung von Heißgasen durchströmbar sind, wobei, zum Umwälzen eines umzuwälzenden. Teils der Heißgase, wenigstens eine Umwälzvorrichtung mit zumindest einer Ansaugöffnung, wenigstens einer Einblasöffnung und einem, die zumindest eine Ansaugöffnung mit der wenigstens einen Einblasöffnung verbindenden, Verdichterelement vorgesehen ist, wobei die Hauptströmungsrichtung in Längsrichtung des Brennkanals verläuft und wobei die Ansaugöffnung quer zur Hauptströmungsrichtung und die Einblasöffnung quer zur Hauptströmungsrichtung angeordnet ist.

Die EP 1 050 731 A1 zeigt einen tunnelartigen Brennofen zum Brennen insbesondere von Keramikwaren.

Die GB 855 322 A zeigt eine Einrichtung zur Ortung schneller Temperaturänderungen an vorbestimmten Punkten eines Tunnelbrennofens.

Die US 4 752 268 A behandelt eine Verbrennungsofen zur Wärmebehandlung und gleichzeitiger Evakuierung von Kathodenstrahlröhren mit Umwälzeinrichtungen zur Erzielung gleichmäßiger Temperaturverteilungen.

Die US 2 975 499 A betrifft einen Tunnelbrennofen für keramische Produkte, der der Länge nach in Trocknungsstationen aufgeteilt ist.

Die DE 21 10 603 A zeigt eine Einrichtung zur Umwälzung der Ofenatmosphäre in einem Tunnelofen.

Aus der DE 12 51 470 B geht ein Verfahren und ein Ofen zur Durchführung des Verfahrens hervor, bei dem Brenngut auf einem Luftkissen gleitend durch den Ofen geführt wird.

Bei bekannten derartigen Brennöfen wird das Stückgut in Stapeln auf einer Transporteinrichtung durch den Brennkanal befördert, wobei Heißgase im Gegenstromprinzip durch den Brennkanal geleitet werden. Um eine geeignete Temperaturverteilung im Brennkanal zu erreichen, wobei eine Aufheizstrecke, eine Brennstrecke und eine Abkühlstrecke aufeinanderfolgen, ist eine Vielzahl an Einlässen für Heißgase über die Länge des Brennkanals erforderlich. Nachteilig an diesen bekannten Brennöfen ist, dass das Stückgut nicht gleichmäßig gebrannt wird und insbesondere die im Stapel höher angeordneten Stückgüter stärker gebrannt werden als die im Stapel tiefer angeordneten. Weiters werden auch die am Rand des Stapels angeordneten Stückgüter stärker gebrannt als die Stückgüter im Inneren des Stapels. Dadurch weisen die Stückgüter nach dem Brennen unterschiedliche physikalische Eigenschaften, insbesondere eine unterschiedliche Festigkeit auf.

Aufgabe der Erfindung ist es, einen Brennofen der oben genannten Art anzugeben, bei dem die bekannten Nachteile vermieden werden, der eine kurze erforderliche Brenndauer aufweist, mit dem ein möglichst gleichmäßiges Brennen aller Stückgüter in dem Brennkanal und im wesentlichen dieselben physikalischen Eigenschaften der Stückgüter nach dem Brennen erreicht werden können.

Weitere Aufgabe der Erfindung ist es, einen Brennofen der oben genannten Art anzugeben, der eine kompakte Bauform aufweisen kann, einfach und kostengünstig herstellbar ist und der ein einfaches und schnelles Umrüsten bestehender Brennöfen ermöglicht.

Erfindungsgemäß wird dies dadurch erreicht, dass jede Umwälzvorrichtung mit zumindest einer Ansaugöffnung, wenigstens einer Einblasöffnung und einem, die zumindest eine Ansaugöffnungmit der wenigstens einen Einblasöffnung verbindenden, Verdichterelement vorgesehen ist, wobei - in der Hauptströmungsrichtung gesehen - jede Ansaugöffnung einer Umwälzvorrichtung hinter jeder Einblasöffnung derselben Umwälzvorrichtung angeordnet ist.

Dadurch ergibt sich der Vorteil, dass eine Strömung der Heißgase quer zur Hauptströmungsrichtung erfolgt, wodurch die Durchmischung der Heißgase im Brennkanal erheblich verbessert wird. Weiters kann der Durchsatz der Heißgase zwischen der Einblasöffnung und der Ansaugöffnung erhöht werden, wodurch der Wärmeübergang zwischen dem Stückgut und den Heißgasen, insbesondere mittels Konvektion, verbessert wird. Durch den höheren Durchsatz wird auch das Durchströmen kleinerer Durchtritte verbessert, wodurch in diesen Durchtritten der Austausch der Heißgase gewährleistet und der Sauerstoffgehalt in diesen Durchtritten erhöht werden kann. Ein weiterer Vorteil der Erfindung ist es, daß für gegebenenfalls im Stapel angeordnete Brennstoffe durch die Erhöhung des Sauerstoffgehalts ein vollständiges Verbrennen dieser Brennstoffe sichergestellt werden kann.

Diese Anordnung stellt sicher, daß der Durchsatz der Heißgase zwischen der Einblasöffnung und der Ansaugöffnung erhöht wird, wobei durch die Größe des umzuwälzenden Teils die physikalischen Eigenschaften der Heißgase, insbesondere Temperatur, Geschwindigkeit, Sauerstoffgehalt od. dgl., geregelt werden können. Bei dieser Anordnung kann die Masse des umzuwälzenden Teils auch größer als die vor der Einblasöffnung im Brennkanal strömende Masse an Heißgasen gewählt werden.

In weiterer Ausgestaltung der Erfindung kann vorgesehen sein, daß der Querschnitt der Ansaugöffnung größer als der Querschnitt der Einblasöffnung ist, wodurch die Heißgase mit einer hohen Geschwindigkeit eingeblasen werden, wobei eine gute Durchmischung der Heißgase in einem Brennkanal gewährleistet ist und auch eine gute Durchströmung aller freien Flächen im Brennkanal sichergestellt wird. Insbesondere kann dadurch ein guter Heißgasaustausch in kleineren Durchtritten gewährleistet werden und auch ein Verbrennen von im Bereich dieser Durchtritte angeordneten Brennstoffen sichergestellt werden.

Gemäß einer weiteren Ausbildung der Erfindung kann vorgesehen sein, daß die Einblasöffnung eine Mehrzahl an Einblasrohren umfaßt. Dadurch können die Heißgase mit einer hohen Geschwindigkeit gerichtet in den Brennkanal eingeblasen werden, wodurch die Durchmischung weiter verbessert werden kann.

Gemäß einer weiteren Ausführungsform der Erfindung kann vorgesehen sein, daß - in der Hauptströmungsrichtung gesehen - eine Mehrzahl an Umwälzvorrichtungen hintereinander angeordnet sind. Dadurch kann der Durchsatz in mehreren Bereichen des Brennofens erhöht und die physikalischen Eigenschaften der Heißgase geregelt werden, wodurch die erforderliche Brenndauer weiter gesenkt und eine kompakte Bauform des Brennofens erzielt werden kann.

In Weiterbildung der Erfindung kann vorgesehen sein, daß ein Haupteinspeisebereich für Heißgase vorgesehen ist, wobei die Erstreckung des Haupteinspeisebereiches in der Hauptströmungsrichtung geringer als die lichte Weite des Brennkanals ist. Durch die Einspeisung in dem Einspeisebereich und einer anschließenden Regelung der physikalischen Eigenschaften der Heißgase können insbesondere auch emeuerbare Energieträger zur Erwärmung der Heißgase verwendet werden.

Die Erfindung betrifft weiters ein Verfahren zum Brennen von keramischem Stückgut, insbesondere Ziegel od. dgl., im erfindungsgemäßen Brennofen, wobei zumindest ein Stapel mit keramischem Stückgut in einem Brennkanal eines Brennofens angeordnet ist und der Brennkanal sowie der zumindest eine Stapel mit keramischem Stückgut in einer Hauptströmungsrichtung von Heißgasen durchströmt werden, und ein umzuwälzender Teil der Heißgase über zumindest eine Ansaugöffnung aus dem Brennkanal gesaugt, mittels eines Verdichterelementes verdichtet und anschließend über wenigstens eine Einblasöffnung in den Brennkanal eingeblasen wird, wobei die Hauptströmungsrichtung in Längsrichtung des Brennkanals verläuft und wobei der umzuwälzender Teil der Heißgase quer zur Hauptströmungsrichtung gesaugt und anschließend quer zur Hauptströmungsrichtung eingeblasen wird.

Bei bekannten derartigen Verfahren wird das Stückgut in Stapeln auf einer Transporteinrichtung durch den Brennkanal befördert, wobei Heißgase im Gegenstromprinzip durch den Brennkanals geleitet werden. Um eine geeignete Temperaturverteilung im Brennkanal zu erreichen, wobei eine Aufheizstrecke, eine Brennstrecke und eine Abkühlstrecke aufeinanderfolgen, ist eine Vielzahl an Einlässen für Heißgase über die Länge des Brennkanals erforderlich. Nachteilig an diesen bekannten Verfahren ist, dass das Stückgut nicht gleichmäßig gebrannt wird und insbesondere die im Stapel höher angeordneten Stückgüter stärker gebrannt werden als die im Stapel tiefer angeordneten. Weiteres werden auch die am Rand des Stapels angeordneten Stückgüter stärker gebrannt als die im Inneren des Stapels angeordneten. Dadurch weisen die Stückgüter nach dem Brennen unterschiedliche physikalische Eigenschaften, insbesondere eine unterschiedliche Festigkeit auf.

Aufgabe der Erfindung ist es, ein Verfahren der eingangs genannten Art anzugeben, bei dem die bekannten Nachteile vermieden werden, mit dem die erforderliche Brenndauer reduzierbar ist, ein möglichst gleichmäßiges Brennen aller Stückgüter in dem Brennkanal erreicht wird und im wesentlichen dieselben physikalischen Eigenschaften der Stückgüter nach dem Brennen erreichbar sind.

Erfindungsgemäß wird dies dadurch erreicht, dass - in Hauptströmungsrichtung gesehen - der umzuwälzende Teil vor der Ansaugöffnung eingeblasen wird.

Dadurch ergibt sich der Vorteil, dass eine Strömung der Heißgase quer zur Hauptströmungsrichtung erfolgt, wodurch die Durchmischung der Heißgase im Brennkanal erheblich verbessert wird. Weiters kann der Durchsatz der Heißgase zwischen der Einblasöffnung und der Ansaugöffnung erhöht werden, wodurch der Wärmeübergang zwischen dem Stückgut und den Heißgasen, insbesondere mittels Konvektion, verbessert wird. Durch den höheren Durchsatz wird auch das Durchströmen kleinerer Durchtritte verbessert, wodurch in diesen Durchtritten der Austausch der Heißgase gewährleistet und der Sauerstoffgehalt in diesen Durchtritten erhöht werden kann. Ein weiterer Vorteil der Erfindung ist es, dass für gegebenenfalls im Stapel angeordnete Brennstoffe durch die Erhöhung des Sauerstoffgehalts ein vollständiges Verbrennen dieser Brennstoffe sichergestellt werden kann.

Diese Anordnung stellt sicher, dass der Durchsatz der Heißgase zwischen der Einblasöffnung und der Ansaugöffnung erhöht wird, wobei durch die Größe des umzuwälzenden Teils die physikalischen Eigenschaften der Heißgase, insbesondere Temperatur, Geschwindigkeit, Sauerstoffgehalt od. dgl., geregelt werden können. Bei dieser Anordnung kann die Masse des umzuwälzenden Teils auch größer als die vor der Einblasöffnung im Brennkanal strömende Masse an Heißgasen gewählt werden.

In Weiterführung der Erfindung kann vorgesehen sein, dass der umzuwälzende Teil mit einer größeren Geschwindigkeit durch die Einblasöffnung eingeblasen als durch die Ansaugöffnung gesaugt wird. Dadurch kann im Bereich der Einblasöffnung eine besonders gute Durchmischung der Heißgase über den gesamten Querschnitt des Brennkanals erreicht werden. Weiters kann das Durchströmen von Durchtritten im Bereich des Stapels und/oder des Stückgutes weiter verbessert werden.

In weiterer Ausgestaltung der Erfindung kann vorgesehen sein, dass die Temperatur und/oder der Sauerstoffgehalt und/oder der Durchsatz der Heißgase durch das Verdichterelement mittels eines Steuerventils einer im Bereich des Verdichterelementes mündenden Gaszuleitung geregelt wird. Mittels der Gaszuleitung können die physikalischen Eigenschaften der Heißgase in einem weiten Bereich auf einfache Weise geregelt werden, wobei insbesondere der Sauerstoffgehalt der Heißgase erhöht werden kann.

Gemäß einer weiteren Ausbildung der Erfindung kann vorgesehen sein, dass mehrere Stapel mittels einer Transportvorrichtung, insbesondere entgegen der Hauptströmungsrichtung, im Brennkanal bewegt werden. Dadurch kann ein großer Durchsatz an Stückgütern durch den Brennkanal erreicht werden.

In Weiterbildung der Erfindung kann vorgesehen sein, dass der Durchsatz an Heißgasen im Brennkanal zwischen der Einblasöffnung und der Ansaugöffnung im Wesentlichen verdoppelt wird, wobei die Masse des umzuwälzenden Teils der Masse der in dem Brennkanal vor der Einblasöffnung strömenden Heißgase entspricht, wodurch der Durchsatz an Heißgasen im Brennkanal zwischen der Einblasöffnung und der Ansaugöffnung im wesentlichen verdoppelt wird und das Brennen des Stückgutes erheblich verbessert und vergleichmäßigt wird.

Gemäß wieder einer anderen Ausführungsform der Erfindung kann vorgesehen sein, dass - in der Hauptströmungsrichtung gesehen - der lichte Querschnitt des Brennkanals zu etwa 10% bis 30% mit die Stapel umhüllender freier Fläche, zu etwa 30% bis 50% mit keramischem Material des Stückgutes und zu etwa 30% bis 50% mit Durchtritten im Stapel und/oder mit Durchtritten im keramischen Material des Stückgutes befüllt wird. Durch diese Befüllung kann ein hinreichendes Durchströmen der Durchtritte sichergestellt werden.

In weiterer Ausgestaltung der Erfindung kann vorgesehen sein, dass vor dem Brennen weitere Brennstoffe, insbesondere Öl, Koks, Kohle, Holz od. dgl., in dem Stapel angeordnet werden, wodurch zusätzliche thermische Energie im Stapel bereitgestellt und eine Verkürzung der Brenndauer erreicht werden kann. Weiters kann durch eine vorgebbare Verteilung der weiteren Brennstoffe die Gleichmäßigkeit der physikalischen Eigenschaften des Stückgutes weiter verbessert werden.

Vorteilhafterweise umfasst die Erfindung weiters eine Umwälzvorrichtung eines umzuwälzenden Teiles der Heißluft eines Brennofens mit zumindest einer Ansaugöffnung, wenigstens einer Einblasöffnung und einem die zumindest eine Ansaugöffnung mit der wenigstens einen Einblasöffnung verbindenden Verdichterelement.

Vorteilhaft ist es, eine Umwälzvorrichtung der oben genannten Art anzugeben, mit der das eingangs genannte Verfahren einfach durchführbar ist, die erforderliche Brenndauer der Stückgüter reduzierbar ist und mit der ein möglichst gleichmäßiges Brennen aller Stückgüter in dem Brennkanal erreicht wird und im wesentlichen dieselben physikalischen Eigenschaften der Stückgüter nach dem Brennen erreichbar sind.

Vorteilhafterweise wird dies dadurch erreicht, daß der Querschnitt der Ansaugöffnung größer als der Querschnitt der Einblasöffnung ist.

Dadurch ergibt sich der Vorteil, daß die Heißgase mit einer hohen Geschwindigkeit eingeblasen werden, wodurch eine gute Durchmischung der Heißgase in einem Brennkanal gewährleistet ist und auch eine gute Durchströmung und/oder Durchströmung des Stückgutes im Brennkanal sichergestellt wird. Insbesondere kann dadurch ein guter Heißgasaustausch in kleineren Durchtritten gewährleistet werden und auch ein Verbrennen von im Bereich dieser Durchtritte angeordneten Brennstoffen sichergestellt werden.

In Weiterbildung kann vorgesehen sein, daß die Einblasöffnung eine Mehrzahl an Einblasrohren umfaßt. Dadurch können die Heißgase mit einer hohen Geschwindigkeit gerichtet in den Brennkanal eingeblasen werden, wodurch die Durchmischung weiter verbessert werden kann.

Die Erfindung wird unter Bezugnahme auf die beigeschlossenen Zeichnungen, in welchen Ausführungsformen dargestellt sind, näher beschrieben. Dabei zeigt:
Fig. 1 einen Längsschnitt durch eine Ausführungsform eines erfindungsgemäßen Brennofens mit einem Brennkanal und einer Umwälzvorrichtung;
Fig. 2 Die Umwälzvorrichtung geschnitten entlang der Linie A-A in Fig. 1;
Fig. 3 die Umwälzvorrichtung geschnitten entlang der Linie B-B in Fig. 1;
Fig. 4 einen Längsschnitt durch eine weitere Ausführungsform einer erfindungsgemäßen Umwälzvorrichtung.

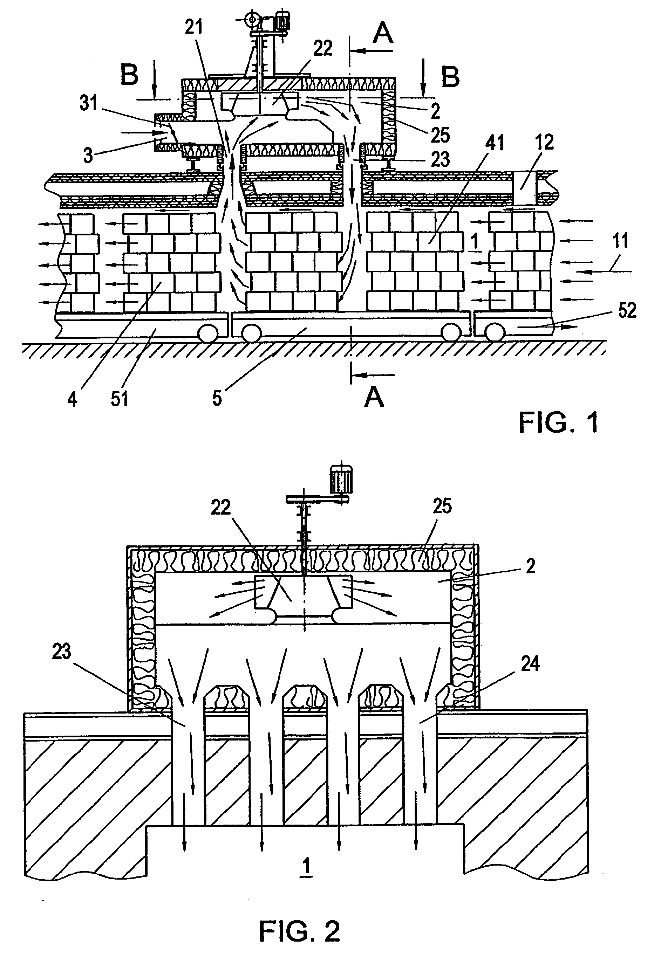

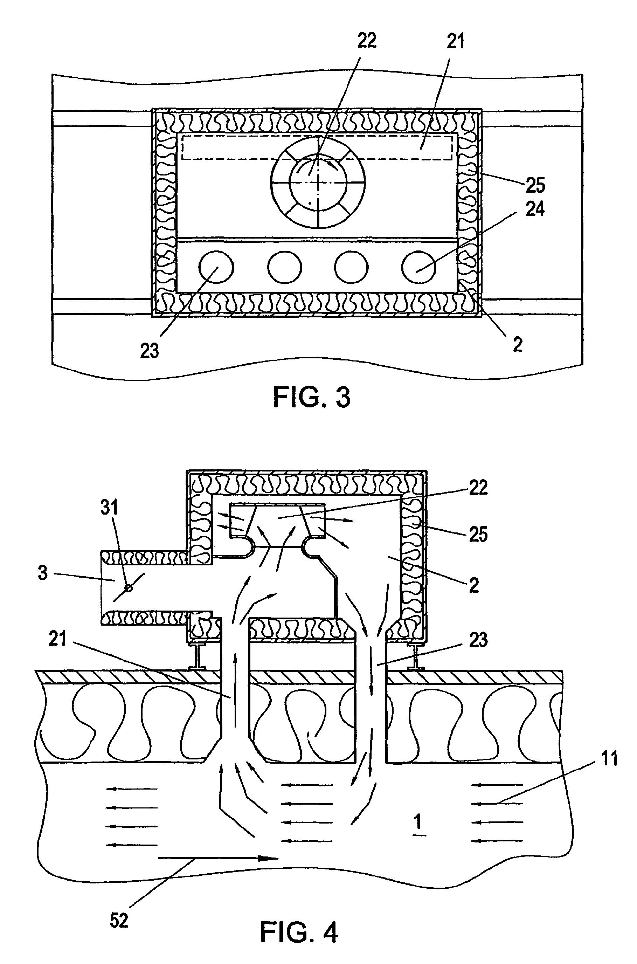

In den Fig. 1 und 4 ist ein Längsschnitt durch Ausführungsformen eines erfindungsgemäßen Brennofens mit einem Brennkanal und einer Umwälzvorrichtung 2 dargestellt. Der Brennofen weist einen Brennkanal 1 auf, in dem zumindest ein Stapel 41 mit keramischem Stückgut 4, insbesondere Ziegel od. dgl., anordenbar ist, wobei der Brennkanal 1 in einer in Längsrichtung des Brennkanals 1 verlaufenden Hauptströmungsrichtung 11 von Heißgasen durchströmbar ist. Weiters ist eine Umwälzvorrichtung 2 vorgesehen, die zumindest eine quer zur Hauptströmungsrichtung 11 angeordneten Ansaugöffnung 21, wenigstens einen quer zur Hauptströmungsrichtung 11 angeordnete Einblasöffnung 23 und einem die zumindest eine Ansaugöffnung 21 und die wenigstens eine Einblasöffnung 23 verbindenden Verdichterelement 22 vorgesehen ist.

Durch die Umwälzvorrichtung 2 wird ein umzuwälzender Teil der Heißgase quer zur Hauptströmungsrichtung 11 über die zumindest eine Ansaugöffnung 21 aus dem Brennkanal 1 gesaugt, mittels des Verdichterelementes 22 verdichtet und anschließend über die wenigstens eine Einblasöffnung 23 in den Brennkanal 1 eingeblasen.

In dem Brennkanal 1 können mehrere Stapel 41 mittels einer Transportvorrichtung 5 im Brennkanal 1 bewegt werden, wobei die Transportrichtung 52 der Transportvorrichtung 5 insbesondere entgegen der Hauptströmungsrichtung 11 erfolgen kann.

Die Stapel 41 können aus aufgeschichteten Stückgütern 4 gebildet sein und gegebenenfalls zusätzliche Stützelemente enthalten. Das erfindungsgemäße Verfahren eignet sich insbesondere zum Brennen von Ziegeln, welche Durchtritte aufweisen. Es können aber auch anders geformte Ziegel oder anderes keramisches Stückgut 4 mit oder ohne Durchtritte verwendet werden.

Ein hoher Wirkungsgrad des erfindungsgemäßen Brennofens wird erreicht, wenn - in der Hauptströmungsrichtung gesehen - der lichte Querschnitt des Brennkanals 1 zu etwa 10% bis 30% mit die Stapel umhüllender freier Fläche, zu etwa 30% bis 50% mit keramischem Material des Stückgutes 4 und zu etwa 30% bis 50% mit Durchtritten im Stapel 41 und/oder Durchtritten im keramischem Material des Stückgutes 4 befüllt wird. Die die Stapel umhüllende freie Fläche stellt sicher, daß das Stückgut 4 beim Transport durch den Brennkanal 1 nicht an den Rändern des Brennkanals 1 anstößt und beschädigt wird. Die Durchtritte im Stapel 41 und die Durchtritte im keramischen Material des Stückgutes 4 ermöglichen ein Durchströmen der Heißgase durch die Stapel 41, wodurch ein gleichförmiges Brennen der Stückgüter im Stapel 41 und am Rand des Stapels 41 erreicht werden kann.

Vor dem Brennen können weitere Brennstoffe, insbesondere Öl, Koks, Kohle, Holz od. dgl., in dem Stapel angeordnet werden, wodurch zusätzliche thermische Energie im Stapel bereitgestellt und eine Verkürzung der Brenndauer erreicht werden kann. Durch die verbesserte Durchströmung des Stapels 41 kann eine hinreichende Sauerstoffzufuhr und damit eine vollständige Verbrennung der weiteren Brennstoffe sichergestellt werden. Weiters kann durch eine vorgebbare Verteilung der weiteren Brennstoffe die Gleichmäßigkeit der physikalischen Eigenschaften des Stückgutes weiter verbessert werden.

Wird - in der Hauptströmungsrichtung gesehen - der umzuwälzende Teil vor der Ansaugöffnung 21 eingeblasen, ist also die Ansaugöffnung 21 hinter der Einblasöffnung 23 angeordnet, so wird der Durchsatz an Heißgasen im Brennkanal 1 zwischen der Einblasöffnung 23 und der Ansaugöffnung 21 um den umzuwälzenden Teil gegenüber dem Durchsatz vor der Einblasöffnung 23 erhöht. Da der umzuwälzende Teil auch mehrmals über das Verdichterelement 22 geleitet werden kann, kann der umzuwälzende Teil auch ein Mehrfaches des Durchsatzes an Heißgasen im Brennkanal 1 vor der Einblasöffnung 23 betragen. Als günstig hat sich herausgestellt, wenn die Masse des umzuwälzenden Teils der Masse der im Brennkanal 1 vor der Einblasöffnung 23 strömenden Heißgase entspricht. Dadurch können im gesamten Brennkanal für das Brennen günstige Strömungsbedingungen sichergestellt werden.

Durch Veränderung der Masse des umzuwälzenden Teils können die physikalischen Eigenschaften der Heißgase, insbesondere Temperatur, Sauerstoffgehalt od. dgl., im Brennkanal zwischen der Einblasöffnung 23 und der Ansaugöffnung 21 geregelt werden.

Weiters kann vorgesehen sein, daß die Temperatur und/oder der Sauerstoffgehalt und/oder der Durchsatz der Heißgase durch das Verdichterelement 22 mittels eines Steuerventils 31 einer im Bereich des Verdichterelementes 22 mündenden Gaszuleitung 3 geregelt wird. Dabei kann insbesondere auch ein Überhitzungsschutz des Verdichterelementes 22 vorgesehen sein, um unerwünschte thermisch bedingte Deformationen zu vermeiden, wodurch das Verdichterelement 22 dauerhaft beschädigt werden könnte.

Es hat sich als günstig herausgestellt, wenn der Querschnitt der Ansaugöffnung 21 größer als der Querschnitt der Einblasöffnung 23 ist, wie dies in den Fig. 2 und 3 dargestellt ist. Dadurch wird erreicht, daß der umzuwälzende Teil mit einer größeren Geschwindigkeit durch die Einblasöffnung 21 eingeblasen als durch die Ansaugöffnung 21 gesaugt wird. Durch die hohe Geschwindigkeit bei der Einblasöffnung 21 wird eine besonders gute Durchmischung der Heißgase in dem Brennkanal 1 erreicht. Weiters kann ein Gasvorhang ausgebildet werden, wodurch eine unterschiedliche Temperatur im Bereich vor der Einblasöffnung 21 im Vergleich zu dem Bereich nach der Einblasöffnung 21 erreichbar ist.

Weiters kann vorgesehen sein, daß die Einblasöffnung 23 eine Mehrzahl an Einblasrohren 24 umfaßt. Mit einer Mehrzahl an Einblasrohren 24 kann der umzuwälzende Teil einfach mit einer hohen Geschwindigkeit gerichtet in den Brennkanal 1 eingeblasen werden. Dadurch kann sichergestellt werden, daß in dem gesamten Brennkanal 1 eine gute Durchmischung der Heißgase stattfindet.

Umfaßt die Transportvorrichtung 5 einzelne Transportwagen 51 od. dgl. und werden die Transportwagen 51 getaktet weiterbewegt, so kann die Einblasöffnung 23 und die Ansaugöffnung 21 bei Stillstand der Transportvorrichtung 5 jeweils zwischen zwei Stapeln 41 angeordnet sein. Werden die Transportwagen 51 jeweils um Ihre Länge im Brennkanal 1 weiterbewegt, so kann die Einblasöffnung 23 von der Ansaugöffnung 21 um die Länge des Transportwagens 51 voneinander beabstandet sein, wodurch bei Stillstand der

Transportvorrichtung 5 genau einer der Transportwagen 51 zwischen der Ansaugöffnung 21 und der Einblasöffnung 23 angeordnet ist.

Der Wirkungsgrad des erfindungsgemäßen Brennofens und des Verfahrens zum Brennen kann weiter verbessert werden, wenn - in der Hauptströmungsrichtung 11 gesehen - eine Mehrzahl an Umwälzvorrichtungen 2 hintereinander angeordnet sind. Dadurch können die physikalischen Eigenschaften der Heißgase in mehreren Bereichen des Brennkanals 1 geregelt werden, wobei die Umwälzvorrichtungen 2 in einer Aufheizstrecke, einer Brennstrecke und/oder einer Abkühlstrecke des Brennofens angeordnet sein können.

Aufgrund der Regelbarkeit der physikalischen Eigenschaften der Heißgase durch die erfindungsgemäßen Umwälzvorrichtungen 2 kann vorgesehen sein, daß ein Haupteinspeisebereich 12 für Heißgase vorgesehen ist, wobei die Erstreckung des Haupteinspeisebereiches 12 in der Hauptströmungsrichtung 11 geringer als die lichte Weite des Brennkanals 1 ist. In dem Haupteinspeisebereich 12 wird im wesentlichen die gesamte für das Verfahren zum Brennen erforderliche thermische Energie eingebracht, wobei durch die Umwälzvorrichtungen 2 die Regelung einzelnen Bereiche des Brennkanals 1 erfolgt. Durch das konzentrierte Einbringen der thermischen Energie ist es möglich, mittels eines zentralen Brenners bereitzustellen, der insbesondere mit erneuerbaren Energieträgern od. dgl. betrieben werden kann.

Die erfindungsgemäße Umwälzvorrichtung 2 kann ein Gehäuse 25 umfassen, dessen Wandung vorzugsweise isoliert ist und insbesondere aus Schamotte bestehen kann. Das Gehäuse 25 ist mit dem Brennkanal 1 mittels der Ansaugöffnung 21 und der Einblasöffnung 23 verbunden. Diese Ausführung der Umwälzvorrichtung 2 ermöglicht eine einfache und schnelle Nachrüstung bestehender Brennöfen. Dabei sind die Ansaugöffnung 21 und die Einblasöffnung 23 in die Wandung, insbesondere in die Decke, des Brennkanals 1 einzubringen und das Gehäuse 25 auf den Brennofen aufzusetzen.

## Patentansprüche

1. Brennofen mit einem Brennkanal (1), wobei zumindest ein Stapel (41) mit keramischem Stückgut (4), insbesondere Ziegel od. dgl., in dem Brennkanal (1) anordenbar ist und der Brennkanal (1) sowie der zumindest eine Stapel (41) mit keramischem Stückgut (4) in einer Hauptströmungsrichtung (11) von Heißgasen durchströmbar sind, wobei, zum Umwälzen eines umzuwälzenden Teils der Heißgase, wenigstens eine Umwälzvorrichtung (2) mit zumindest einer Ansaugöffnung (21), wenigstens einer Einblasöffnung (23) und einem, die zumindest eine Ansaugöffnung (21) mit der wenigstens einen Einblasöffnung (23) verbindenden, Verdichterelement (22) vorgesehen ist, wobei die Hauptströmungsrichtung (11) in Längsrichtung des Brennkanals (1) verläuft und wobei die Ansaugöffnung (21) quer zur Hauptströmungsrichtung (11) und die Einblasöffnung (23) quer zur Hauptströmungsrichtung (11) angeordnet ist, **dadurch gekennzeichnet, dass** jede Umwälzvorrichtung (2) mit zumindest einer Ansaugöffnung (21), wenigstens einer Einblasöffnung (23) und einem, die zumindest eine Ansaugöffnung (21) mit der wenigstens einen Einblasöffnung (23) verbindenden, Verdichterelement (22) vorgesehen ist, wobei - in der Hauptströmungsrichtung (11) gesehen - jede Ansaugöffnung (21) einer Umwälzvorrichtung (2) hinter jeder Einblasöffnung (23) derselben Umwälzvorrichtung (2) angeordnet ist.

2. Brennofen nach Anspruch 1, **dadurch gekennzeichnet, dass** der Querschnitt der Ansaugöffnung (21) größer als der Querschnitt der Einblasöffnung (23) ist.

3. Brennofen nach Anspruch 1 oder 2, **dadurch gekennzeichnet, dass** die Einblasöffnung (23) eine Mehrzahl an Einblasrohren (24) umfaßt.

4. Brennofen nach einem der Ansprüche 1 bis 3, **dadurch gekennzeichnet, dass** - in der Hauptströmungsrichtung (11) gesehen - eine Mehrzahl an Umwälzvorrichtungen (2) hintereinander angeordnet sind.

5. Brennofen nach einem der Ansprüche 1 bis 4, **dadurch gekennzeichnet, dass** ein Haupteinspeisebereich (12) für Heißgase vorgesehen ist, wobei die Erstreckung des Haupteinspeisebereiches (12) in der Hauptströmungsrichtung (11) geringer als die lichte Weite des Brennkanals (1) ist.

6. Verfahren zum Brennen von keramischem Stückgut (4), insbesondere Ziegel od. dgl., in einem Brennofen nach einem der Ansprüche 1 bis 5, wobei zumindest ein Stapel (41) mit keramischem Stückgut (4) in einem Brennkanal (1) eines Brennofens angeordnet ist und der Brennkanal (1) sowie der zumindest eine Stapel (41) mit keramischem Stückgut (4) in einer Hauptströmungsrichtung (11) von Heißgasen durchströmt werden, und ein umzuwälzender Teil der Heißgase über zumindest eine Ansaugöffnung (21) aus dem Brennkanal (1) gesaugt, mittels eines Verdichterelementes (22) verdichtet und anschließend über wenigstens eine Einblasöffnung (23) in den Brennkanal (1) eingeblasen wird, wobei die Hauptströmungsrichtung (11) in Längsrichtung des Brennkanals (1) verläuft und wobei der umzuwälzender Teil der Heißgase quer zur Hauptströmungsrichtung (11) gesaugt und anschließend quer zur Hauptströmungsrichtung (11) eingeblasen wird, **dadurch gekennzeichnet, dass** - in Hauptströmungsrichtung (11) gesehen - der umzuwälzende Teil vor der Ansaugöffnung (21) eingeblasen wird.

7. Verfahren nach Anspruch 6, **dadurch gekennzeichnet, dass** der umzuwälzende Teil mit einer größeren Geschwindigkeit durch die Einblasöffnung (23) eingeblasen als durch die Ansaugöffnung (21) gesaugt wird.

8. Verfahren nach Anspruch 6 oder 7, **dadurch gekennzeichnet, dass** die Temperatur und/oder der Sauerstoffgehalt und/oder der Durchsatz der Heißgase durch das Verdichterelement (22) mittels eines Steuerventils (31) einer im Bereich des Verdichterelementes (22) mündenden Gaszuleitung (3) geregelt wird.

9. Verfahren nach einem der Ansprüche 6 bis 8, **dadurch gekennzeichnet, dass** mehrere Stapel (41) mittels einer Transportvorrichtung (5), insbesondere entgegen der Hauptströmungsrichtung (11), im Brennkanal (1) bewegt werden.

10. Verfahren nach einem der Ansprüche 6 bis 9, **dadurch gekennzeichnet, dass** der Durchsatz an Heißgasen im Brennkanal (1) zwischen der Einblasöffnung (23) und der Ansaugöffnung (21) verdoppelt wird, wobei die Masse des umzuwälzenden Teils der Masse der in dem Brennkanal (1) vor der Einblasöffnung (23) strömenden Heißgase entspricht.

11. Verfahren nach einem der Ansprüche 6 bis 10, **dadurch gekennzeichnet, dass** - in der Hauptströmungsrichtung (11) gesehen - der lichte Querschnitt des Brennkanals (1) 10% bis 30% mit die Stapel umhüllender freier Fläche, 30% bis 50% mit keramischem Material des Stückgutes (4) und 30% bis 50% mit Durchtritten im Stapel (41) und/oder mit Durchtritten im keramischen Material des Stückgutes (4) befüllt wird.

12. Verfahren nach einem der Ansprüche 6 bis 11, **dadurch gekennzeichnet, dass** vor dem Brennen weitere Brennstoffe, insbesondere Öl, Koks, Kohle oder Holz, in dem Stapel angeordnet werden.

## Claims

1. A firing kiln with a firing channel (1), with at least one stack (41) with ceramic piece goods (4), especially bricks or the like, being capable of being arranged in the firing channel (1) and the firing channel (1) and the at least one stack (41) with ceramic piece goods (4) being capable of being flowed through in a main direction of flow (11) by hot gases, with at least one circulating apparatus (2) with at least one intake opening (21), at least one injection opening (23) and at least one compressor element (22) which connects the at least one intake opening (21) with the at least one injection opening (23) being provided for circulating a portion of the hot gases to be circulated, with the main direction of flow (11) extending in the longitudinal direction of the firing channel (1) and with the intake opening (21) being arranged transversally to the main direction of flow (11) and the injection opening (23) transversally to the main direction of flow (11), **characterized in that** each circulating apparatus (2) is provided with at least one intake opening (21), at least one injection opening (23) and a compressor element (22) which connects the intake opening (21) with the at least one injection opening (23), with each intake opening (21) of a circulating apparatus (2) being arranged behind each injection opening (23) of the same circulating apparatus (2), as seen in the main direction of flow (11).

2. A firing kiln according to claim 1, **characterized in that** the cross section of the intake opening (21) is larger than the cross section of the injection opening (23).

3. A firing kiln according to claim 1 or 2, **characterized in that** the injection opening (23) comprises a plurality of injection tubes (24).

4. A firing kiln according to one of the claims 1 to 3, **characterized in that** a plurality of circulating apparatuses (2) are arranged behind one another, as seen in the main direction of flow (11).

5. A firing kiln according to one of the claims 1 to 4, **characterized in that** a main feed region (12) for hot gases is provided, with the extension of the main feed region (12) in the main direction of flow (11) being lower than the clearance of the firing channel (1).

6. A method for firing ceramic piece goods (4), especially bricks or the like, in a firing kiln according to one of the claims 1 to 5, with at least one stack (41) with ceramic piece goods (4) being arranged in a firing channel (1) of a firing kiln, and the firing channel (1) and the at least one stack (41) with ceramic piece goods (4) are flowed through by hot gases in a main direction of flow (11), and a portion of the hot gases to be circulated is sucked off via at least one suction opening (21) from the firing channel (1), compressed by means of a compressor element (22) and thereafter injected via at least one injection opening (23) into the firing channel (1), with the main direction of flow (11) extending in the longitudinal direction of the firing channel (1) and with the portion of the hot gases to be circulated being sucked off transversally to the main direction of flow (11) and thereafter being injected transversally to the main direction of flow (11), **characterized in that** the portion to be circulated is injected before the suction opening (21), as seen in the main direction of flow (11).

7. A method according to claim 6, **characterized in that** the portion to be circulated is injected with a higher speed through the injection opening (23) than it is sucked through the suction opening (21).

8. A method according to claim 6 or 7, **characterized in that** the temperature and/or the oxygen content and/or the throughput of the hot gases through the compressor element (22) is controlled by means of a control valve (31) of a gas feed line (3) opening in the region of the compressor element (22).

9. A method according to one of the claims 6 to 8, **characterized in that** several stacks (41) are moved by means of a transport apparatus (5) in the firing channel (1), especially against the main direction of flow (11).

10. A method according to one of the claims 6 to 9, **characterized in that** the throughput of hot gases in the firing channel (1) is doubled between the injection opening (23) and the suction opening (21), with the mass of the portion of the mass to be circulated corresponding to the hot gases flowing into the firing channel (1) before the injection opening (23).

11. A method according to one of the claims 6 to 10, **characterized in that** the clearance of the firing channel (1) is filled to 10% to 30% with the free surface enclosing the stacks, to 30% to 50% with ceramic material of the piece goods (4) and to 30% to 50% with passages (41) in the stack (41) and/or with passages in the ceramic material of the piece goods (4).

12. A method according to one of the claims 6 to 11, **characterized in that** further fuels such as oil, coke, coal or wood are arranged in the stack before the firing.

## Revendications

1. Four de cuisson avec un canal de cuisson (1), dans lequel au moins une pile (41) d'articles en céramique (4), en particulier de tuiles ou similaires, peut être disposée dans le canal de cuisson (1) et le canal de cuisson (1) ainsi que l'au moins une pile (41) d'articles en céramique (4) peuvent être parcourus par des gaz chauds dans un sens d'écoulement principal (11), dans lequel, pour faire circuler la partie à mettre en circulation des gaz chauds, il est prévu au moins un dispositif de circulation (2) avec au moins une ouverture d'aspiration (21), au moins une ouverture d'injection (23) et un élément compresseur (22) reliant l'au moins une ouverture d'aspiration (21) avec l'au moins une ouverture d'injection (23), le sens d'écoulement principal (11) allant dans le sens longitudinal du canal de cuisson (1) et l'ouverture d'aspiration (21) étant disposée perpendiculairement au sens d'écoulement principal (11) et l'ouverture d'injection (23) perpendiculairement au sens d'écoulement principal (11), **caractérisé en ce que** chaque dispositif de circulation (2) est muni d'au moins une ouverture d'aspiration (21), d'au moins une ouverture d'injection (23) et d'un élément compresseur (22) reliant l'au moins une ouverture d'aspiration (21) avec l'au moins une ouverture d'injection (23), chaque ouverture d'aspiration (21) d'un dispositif de circulation (2) étant disposée, dans le sens d'écoulement principal (11), en aval de chaque ouverture d'injection (23) du même dispositif de circulation (2).

2. Four de cuisson selon la revendication 1, **caractérisé en ce que** la section de l'ouverture d'aspiration (21) est plus grande que celle de l'ouverture d'injection (23).

3. Four de cuisson selon la revendication 1 ou 2, **caractérisé en ce que** l'ouverture d'injection (23) comprend une pluralité de tubes d'injection (24).

4. Four de cuisson selon l'une des revendications 1 à 3, **caractérisé en ce qu'**une pluralité de dispositif de circulation (2) est disposée les uns à la suite des autres dans le sens d'écoulement principal (11).

5. Four de cuisson selon l'une des revendications 1 à 4, **caractérisé en ce qu'**il est prévu une zone principale d'alimentation (12) pour les gaz chauds, l'étendue de la zone principale d'alimentation (12) dans le sens d'écoulement principal (11) étant plus petite que la largeur du canal de cuisson (1).

6. Procédé de cuisson d'articles en céramique (4), en particulier de briques ou similaires, dans un four de cuisson selon l'une des revendications 1 à 5, dans lequel au moins une pile (41) d'articles en céramique (4) est disposée dans un canal de cuisson (1) d'un four de cuisson et le canal de cuisson (1) ainsi que l'au moins une pile (41) d'articles en céramique (4) sont parcourus par des gaz chauds dans un sens d'écoulement principal (11) et une partie des gaz chauds à mettre en circulation est aspirée par au moins une ouverture d'aspiration (21) hors du canal de cuisson (1), compressée au moyen d'un élément compresseur (22) puis injectée par au moins une ouverture d'injection (23) dans le canal de cuisson (1), le sens d'écoulement principal (11) allant dans le sens longitudinal du canal de cuisson (1) et la partie des gaz chauds à mettre en circulation étant aspirée perpendiculairement au sens d'écoulement principal (11) puis injectée perpendiculairement au sens d'écoulement principal (11), **caractérisé en ce que** la partie à mettre en circulation est injectée, vue dans le sens d'écoulement principal (11), en amont de l'ouverture d'aspiration (21).

7. Procédé selon la revendication 6, **caractérisé en ce que** la partie à mettre en circulation est injectée à une plus grande vitesse à travers l'ouverture d'injection (23) qu'elle est aspirée à travers l'ouverture d'aspiration (21).

8. Procédé selon la revendication 6 ou 7, **caractérisé en ce que** la température et/ou la teneur en oxygène et/ou le débit des gaz chauds sont régulés par l'élément compresseur (22) au moyen d'une vanne de commande (31) d'une conduite d'arrivée de gaz (3) débouchant au niveau de l'élément compresseur (22).

9. Procédé selon l'une des revendications 6 à 8, **caractérisé en ce que** plusieurs piles (41) sont déplacées au moyen d'un dispositif de transport (5), en particulier en sens inverse du sens d'écoulement principal (11), dans le canal de cuisson (1).

10. Procédé selon l'une des revendications 6 à 9, **caractérisé en ce que** le débit de gaz chauds dans le canal de cuisson (1) est doublé entre l'ouverture d'injection (23) et l'ouverture d'aspiration (21), la masse de la partie à mettre en circulation correspondant à la masse des gaz chauds circulant dans le canal de cuisson (1) en amont de l'ouverture d'injection (23).

11. Procédé selon l'une des revendications 6 à 10, **caractérisé en ce que**, vue dans le sens d'écoulement principal (11), la section libre du canal de combustion (1) est remplie à 10 % à 30 % avec la surface libre entourant la pile, à 30 % à 50 % avec le matériau céramique des articles (4) et à 30 % à 50 % avec des passages dans la pile (41) et/ou avec des passages dans le matériau céramique des articles (4).

12. Procédé selon l'une des revendications 6 à 11, **caractérisé en ce que** d'autres combustibles, en particulier du mazout, du coke, du charbon ou du bois, sont disposés dans la pile avant la cuisson.
